# EUROPÄISCHE PATENTSCHRIFT

(11) **EP 0 417 687 B1**
(45) Veröffentlichungstag und Bekanntmachung des Hinweises auf die Patenterteilung: **02.03.1994**
(21) Anmeldenummer: 90117371.6
(22) Anmeldetag: 10.09.1990
(51) Int. Cl.: B23K 11/31

(54) **Schweisszange für Industrieroboter**
Welding gun for industrial robot
Pince de soudage pour robot industriel

(30) Priorität: 12.09.1989 DE 8910906 U
(43) Veröffentlichungstag der Anmeldung: 20.03.1991
(73) Patentinhaber: Hans Flohe GmbH & Co., D-44579 Castrop-Rauxel (DE)
(72) Erfinder: Dung, Herbert, D-4600 Dortmund 30 (DE)
(74) Vertreter: Henfling, Fritz, Dipl.-Ing.

(56) Entgegenhaltungen:
- EP-A- 0 113 315
- EP-A- 0 132 176

## Beschreibung

Die Erfindung betrifft eine Schweißzange für Industrieroboter, der im Oberbegriff des Ansprüches 1 umrissenen Gattung.

Solche Schweißzangen, insbesondere deren Zangenschenkel, müssen auf die Kräfte ausgelegt sein, die beim Schweißvorgang auftreten. Bei bekannten Schweißzangen, deren Zangenschenkel Stahlgußteile sind, schlägt sich das in einem vergleichsweise hohen Gewicht nieder. Man hat dann auch schon Zangenschenkel aus Aluminium (siehe z.B. EP-A1-0 132 176) gefertigt, um entsprechende Kräfte aufnehmen zu können, dabei bedarf es allerdings vergleichsweise großer Querschnitte, die zu vergleichbaren Gewichten führen. Anlagenseitig wird jedoch ein möglichst geringes Gewicht der Roboterwerkzeuge angestrebt.

Ausgehend vom im Vorausgehenden umrissenen Stand der Technik liegt der Erfindung in erster Linie das Bedürfnis nach gattungsgemäßen Schweißzangen mit geringerem Gewicht zugrunde.

Dem Bedürfnis wird bei einer solchen Schweißzange erfindungsgemäß in der Weise Rechnung getragen, daß ausgehärtete Formteile aus Epoxidharz mit darin vernetzt eingelagerten Kohlefasern den Lagerbock und die Zangenschenkel bilden.

Die Formteile aus Epoxidharz mit darin vernetzt eingelagerten Kohlefasern erbringen bei vergleichbarer Festigkeit für die Schweißzange eine Gewichtseinsparung von mindestens 20%, womit der anlagenseitigen Forderung nach möglichst leichten Roboterwerkzeugen in merklichem Umfang Rechnung getragen wird.

Die Gewichtseinsparung läßt sich weitergehend durch konstruktive Maßnahmen verbessern, etwa durch mehrlagigen Aufbau der Zangenschenkel und Ausbildung von Hohlräumen in den Zangenschenkeln.

Das nichtleitende Material, aus dem der Lagerbock und die Zangenschenkel bestehen, erspart dann auch eine elektrische Isolierung dieser Teile. Aus der Erfindung resultiert weitergehend ein besseres Prellverhalten beim Anstellen der Elektroden gegen das Werkstück. Zur Verbesserung des Prellverhaltens trägt bei, wenn zwischen den Zangenschenkeln und am Lagerbock vorgesehenen Widerlagern beim Anstellen der Elektroden dämmpfend wirkende Federelemente, vorzugsweise Elastomer-Federn, vorgesehen werden. Über die Einstellbarkeit mindestens einer der Federn lassen sich sowohl die Ausgangslage der Elektrodenspitzen als auch die Amplitude der Schwenkarme beeinflussen.

In der Zeichnung ist die Erfindung anhand eines in schematischerweise dargestellten Ausführungsbeispieles weitergehend erläutert. Es zeigen:

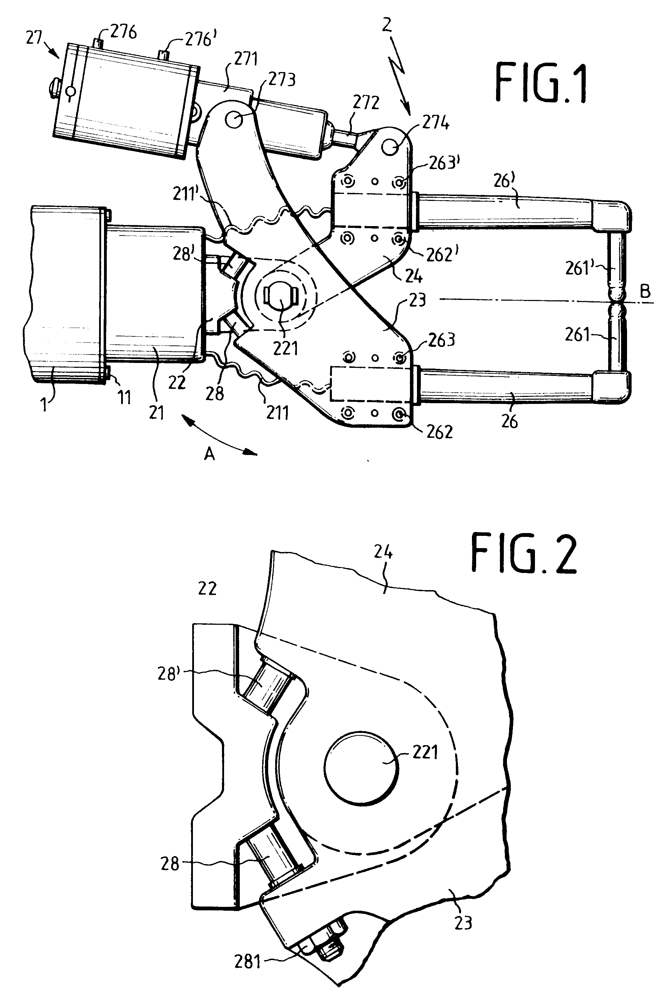

- Figur 1: die neue Schweißzange in Seitenansicht,
- Figur 2: den Lagerbereich der Zangenschenkel in größerem Maßstab,
- Figur 3: die Schweißzange in Stirnansicht, die Elektrodenhalter in Schnittdarstellung.

Die dem Arm 1 eines im übrigen nicht dargestellten Roboters zuzuordnende Schweißzange ist mit 2 bezeichnet, die als Ganzes an den Roboterarm 1 angeflanscht ist (11). Bestandteile der Schweißzange 2 sind der Schweißtransformator 21, der auf dem Transformator 21 aufsitzende Lagerbock 22, die am Lagerbock 22 im Sinne des Doppelpfeiles A um die gemeinsame Achse 221 verschwenkbar gelagerten Zangenschenkel 23 und 24 mit den Elektrodenhaltern 26 und 26′ für die gegen das in der Ebene B liegende Werkstück anstellbaren Elektroden 261, 261′ und dem Stellzylinder 27, an dessen Zylinderrohr 271 der Zangenschenkel 23 angelenkt ist (273) und an dessen Kolbenstange 272 der Zangenschenkel 24 angelenkt ist (274). Mit 211 und 211′ sind die sich zwischen dem Transformator 21 und den elektrisch leitenden Elektrodenhaltern 26, 26′ erstreckende Verbindungsleitungen bezeichnet. 276 und 276′ sind die Druckmittelanschlüsse am Stellzylinder 27.

Lagerbock 22 sowie Zangenschenkel 23 und 24 sind Formteile aus ausgehärtetem Epoxidharz mit vernetzt eingelagerten Kohlefasern. Die in besonderer Weise ausgestalteten Zangenschenkel 23 und 24 sind mehrlagig dergestalt aufgebaut, daß die doppellagigen Teilstücke 231/232 u. 231′/232′ des Zangenschenkels 23 des Zylinderrohrs 271 und die doppellagige Teilstücke 241/242 u.241'/242'des Zangenschenkels 24 die Kolbenstange 271 des Zylinders 27 einfassen, und die jeweiligen Innenlagen 231/231′ bzw. 241/241′ im Ansatzbereich der Elektrodenhalter 26, 26′ zu Halbschalen 233, 233′, 243, 243′ ausgeformt die Aufnahmen für die Elektrodenhalter 26, 26′ bilden. In den an die Elektrodenaufnahmen angrenzenden Bereichen nehmen die Doppellagen 231, 232 bzw. 231′, 232′ bzw. 241, 242 bzw. 241′, 242′ der Teilstücke der Zangenschenkel 23 und 24 einen Hohlräume 234, 234′, 244, 244′ und 246, 246′ ausbildenden Verlauf zueinander.

Mit 262 und 263 bzw. 262′ und 263′ sind die Klemmittel bezeichnet, mit denen die sich in den Aufnahmen 233, 233′ und 243, 243′ der Zangenschenkel 23 und 24 befindenden Elektrodentragarme 26 und 26′ gegenüber den Zangenschenkeln 23 und 24 festgelegt werden.

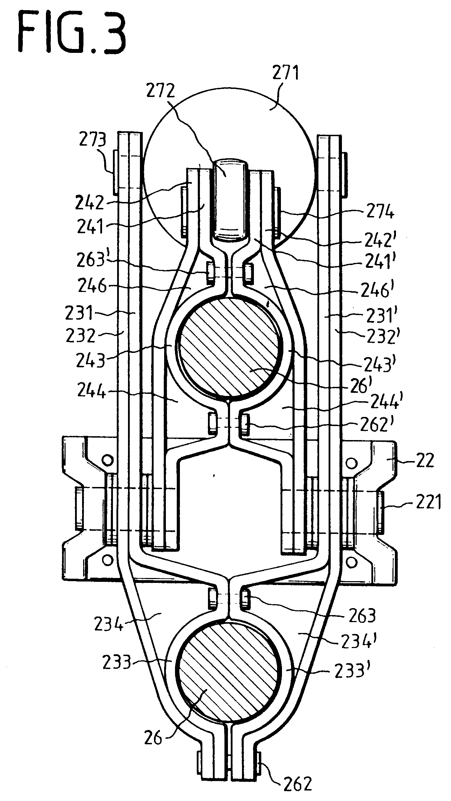

Als Dämmpfungselemente können zwischen den Zangenschenkeln 23 und 24 und Widerlagern am Lagerbock 22 Federelemente, beispielsweise Elastomer-Federn 28, 28′, angeordnet sein, von denen im in Figur 3 dargestellten Fall die Feder 28 einstellbar ist (281).

## Patentansprüche

1. Bestandteil von Industrierobotern bildende Schweißzange (2), bestehend aus dem am Roboter ansetzbaren Schweißtransformator (21) mit aufgesetztem Lagerbock (22), zwei an dem Lagerbock (22) zur vom Transformator (21) abgekehrten Seite hin orientierten, gegeneinander verschwenkbaren Zangenschenkeln (23,24), von deren freien Enden Elektrodenhalter (26,26') ausgehen, an deren freien Enden die gegeneinander orientierten Elektroden (261,261') angeordnet sind, wobei der Überstand des einen Zangenschenkels (23) über den Lagerbock (22) am Zylinderrohr (271) eines Anstellzylinders (27) angreift und der Überstand des anderen Zangenschenkels (24) über dessen Elektrodenhalter (26') an der Kolbenstange (272) des Anstellzylinders (27), mit elektrischen Verbindungen (211,211') zwischen dem Transformator (21) und den Elektrodenhaltern (26,26') sowie mit Druckmittelanschlüssen am Anstellzylinder (27), dadurch gekennzeichnet, daß der Lagerbock (22) und die Zangenschenkel (23, 24) ausgehärtete Formteile aus Epoxidharz mit darin vernetzt eingelagerten Kohlefasern sind.

2. Schweißzange nach Anspruch 1, gekennzeichnet durch längsgeteilte Zangenschenkel (23, 24), deren Teilstücke elektrodenseitig zu die Aufnahme für die Elektrodentragarme (26, 26′) bildenden Halbschalen (233, 233′ u. 243, 243′) ausgeformt sind.

3. Schweißzange nach Anspruch 1 oder Anspruch 2, gekennzeichnet durch mehrlagige, insbesondere zweilagige Zangenschenkel (23, 24) bzw.Zangenschenkelteilstücke.

4. Schweißzange nach Anspruch 3, dadurch gekennzeichnet, daß die die Teilstücke der Zangenschenkel (23, 24) bildenden Lagen (231, 232 bis 241′, 242′) in den an die die Elektrodenaufnahmen bildenden Halbschalen (233, 233′ u. 243, 243′) angrenzenden Bereichen Hohlräume (234, 234′, 244, 244′, 246, 246′) bildend ausgeformt sind.

5. Schweißzange nach einem der Ansprüche 1 bis 4, dadurch gekennzeichnet, daß zwischen den Zangenschenkeln (23, 24) und an den Lagerbock (22) angeformten Widerlagern Federelemente (28, 28′) eingefügt sind.

6. Schweißzange nach Anspruch 5, gekennzeichnet durch Elastomer-Federn als Federelemente (28, 28′).

7. Schweißzange nach Anspruch 5 oder Anspruch 6, gekennzeichnet durch mindestens eine einstellbare Feder.

## Claims

1. Welding tongs (2), which form a component part of industrial robots and include the welding transformer (21), which is attachable to the robot and has a bearing block (22) mounted thereon, two tong arms (23, 24), which are orientated towards the side remote from the transformer (21) on the bearing block (22) and are pivotable relative to each other, electrode holders (26, 26') extending from the free ends of said arms, and the electrodes (261, 261'), which are orientated towards each other, being disposed on the free ends of said holders, the projecting length of one tong arm (23), which protrudes beyond the bearing block (22), being engaged on the cylindrical tube (271) of an adjusting cylinder (27), and the projecting length of the other tong arm (24), which protrudes beyond its electrode holder (26'), being engaged on the piston rod (272) of the adjusting cylinder (27), with electrical connections (211, 211') between the transformer (21) and the electrode holders (26, 26') and with pressure medium connections on the adjusting cylinder (27), characterised in that the bearing block (22) and the tong arms (23, 24) are age-hardened mouldings formed from epoxy resin with carbon fibres embedded therein in a cross-linked manner.

2. Welding tongs according to claim 1, characterised by longitudinally divided tong arms (23, 24), the portions of which, at the electrode end, are shaped into half shells (233, 233' and 243, 243'), which form the receiving holders for the electrode supporting arms (26, 26').

3. Welding tongs according to claim 1 or claim 2, characterised by multi-layered, more especially two-layered, tong arms (23, 24), or tong arm portions respectively.

4. Welding tongs according to claim 3, characterised in that the layers (231, 231 to 241', 242'), which form the portions of the tong arms (23, 24), are shaped to form cavities (234, 234', 244, 244', 246, 246') in the regions abutting against the half shells (233, 233' and 243, 243'), which form the electrode holders.

5. Welding tongs according to one of claims 1 to 4, characterised in that resilient members (28, 28') are inserted between the tong arms (23, 24) and abutments, which are moulded to fit on the bearing block (22).

6. Welding tongs according to claim 5, characterised by elastomeric springs serving as resilient members (28, 28').

7. Welding tongs according to claim 5 or claim 6, characterised by at least one adjustable spring.

## Revendications

1. Composant de pince à souder (2) constituant des robots industriels; composé du transformateur de soudage (21) pouvant être monté sur le robot, avec un bloc de palier (22) monté dessus; deux branches de pince (23,24) montées sur le bloc de palier (22) et orientées vers le côté opposé au transformateur (21), pouvant pivoter l'une vers l'autre, des extrémités libres desquelles partent des porte-électrodes (26, 26'), aux extrémités libres desquelles sont disposés les électrodes (261, 261') orientées en direction l'une de l'autre, le porte-à-faux d'une branche de pince (23) au dessus du bloc de palier (22) agissant sur le tube (271) d'un vérin applicateur (27) et le porte-à-faux de l'autre branche de pince (24) au dessus de son porte-électrodes (26') agissant sur la tige de piston (272) du vérin applicateur (27), avec des liaisons électriques (211, 211') entre le transformateur (21) et les porte-électrodes (26, 26') ainsi qu'avec des raccordements de fluide sous pression au vérin applicateur (27), caractérisé en ce que le bloc de palier (22) et les branches de pince (23, 24) sont des pièces moulées durcies en résine époxy avec des fibres de carbone intégrées suivant un réseau.

2. Pince de soudage selon la revendication 1, caractérisée par des branches de pince (23, 24) divisées sur leur longueur, dont les tronçons sont évidés, côté électrode, en demi-coquilles (233, 233' et 243, 243') formant les bras porte-électrodes (26, 26').

3. Pince de soudage selon la revendication 1 ou 2, caractérisée par des branches de pince (23, 24) ou des tronçons de branches de pince multi-couche, en particulier à deux couches.

4. Pince de soudage selon la revendication 3, caractérisée en ce que les tronçons des couches (231, 232 à 241', 242'), formant les branches de pince (23, 24) sont évidés dans les zones délimitant les demi-coquilles (233, 233' et 243, 243') formant les logements d'électrodes, en formant des espaces creux (234, 234', 244, 244', 246, 246').

5. Pince de soudage selon l'une des revendications 1 à 4, caractérisée en ce que des éléments élastiques (28, 28') sont insérés, entre les branches de pince (23, 24) et les appuis conjugués formés d'un seul tenant sur le bloc de palier (22).

6. Pince de soudage selon la revendication 5, caractérisée par le fait que l'on utilise des ressorts en élastomère comme éléments élastiques (28, 28').

7. Pince de soudage selon la revendication 5 ou 6, caractérisée par le fait qu'au moins un ressort est réglable.
